# EUROPÄISCHE PATENTSCHRIFT

(11) **EP 0 957 005 B1**
(45) Veröffentlichungstag und Bekanntmachung des Hinweises auf die Patenterteilung: **09.01.2002**
(21) Anmeldenummer: 99103475.2
(22) Anmeldetag: 23.02.1999
(51) Int. Cl.: B60R 21/045, B60R 19/48, B60R 1/12

(54) **Anlage mit Gerät zur Fahrerorientierung**
Installation with apparatus for driver orientation
Installation avec un dispositif pour l'orientation de conducteur

(30) Priorität: 14.05.1998 DE 19821737
(43) Veröffentlichungstag der Anmeldung: 17.11.1999
(73) Patentinhaber: Herms, Sandra, 29600 Marbella (ES)
(72) Erfinder: Herms, Günter, 53773 Hennef-Allner (DE)
(74) Vertreter: Liesegang, Roland, Dr.-Ing.

(56) Entgegenhaltungen:
- DE-A- 19 634 745
- FR-A- 2 688 456
- US-A- 4 133 405
- US-A- 4 568 102

## Beschreibung

Die Erfindung betrifft eine Anlage mit Gerät zur Fahrerorientierung an einem Kart.

Übliche Karts sind äußerst spartanisch ausgerüstet. Im Regelfall verfügen sie nicht einmal über Rückspiegel, geschweige denn über Kontrollinstrumente.

Deshalb kommt es auf dem Gebiet des Kartsports häufiger zu Unfällen als bei sonstigen Autorennen oder Rallyes. Insbesondere die leichten, hochmotorisierten Karts zeigen aufgrund ihrer hohen Beschleunigungsfähigkeit Tendenz zum Hochsteigen des Vorderwagens. Das Kart kann dabei leicht auf ein vor ihm fahrendes Kart geraten. Wenn dort vorstehende Teile, wie Rückspiegel oder dergleichen angebracht sind, kann sich das auffahrende Kart daran verhaken, was zu bösen Unfällen verbunden mit Überschlag und dergleichen führen kann. Man hat deshalb bisher die Anbringung von vorstehenden Spiegeln oder dergleichen, wie sie durchaus sonst im Rennsport einschließlich bei Formel-1-Rennwagen vorhanden sind, bei Karts vermieden.

Das Fehlen von Rückspiegeln und sonstigem Orientierungsgerät, wie Kontrollinstrumenten für den Motor, wie Drehzahlmesser, Öl- und Kühlwassertermometer sowie Sicherungsvorrichtungen wie Warnlampen, welche dem Fahrer Störungen am Fahrzeug anzeigen, erhöhen das allgemeine Sicherheitsrisiko für den Fahrer beträchtlich.

Aus der US-A-4 568 102 ist ein verformbares Armaturenbrett für Motorfahrzeuge bekannt, das dick mit einem Schaumstoff gepolstert und so geneigt ist, daß es bei einer Kollision eine möglichst große Aufschlagsfläche für den nach vorn geschleuderten Fahrer schafft, und das außerdem verformbare Instrumente enthalten kann.

Ferner ist aus der FR-A-2 688 456 ein Armaturenbrett für ein Automobil bekannt, dem ein gepolstertes Instrumententeil mit Gerät zur Fahrerorientierung einschließlich zweier Rückspiegel vorgelagert ist.

Der Erfindung liegt die Aufgabe zugrunde, eine Anlage mit Gerät zur Fahrerorientierung in einem Kart zu schaffen, mit der das allgemeine Sicherheitsrisiko und außerdem die spezielle, oben geschilderte Unfallgefahr bei Kartrennen vermindert sind.

Zur Lösung dieser Aufgabe dient Patentanspruch 1. Der vor dem Fahrer angeordnete Träger aus Weichstoff ist zumindest im Bereich vor dem Fahrer unverstärkt, so daß der nachgiebige, in allen Belastungsrichtungen, insbesondere auch in Querrichtung des Fahrzeuges, knautschbare Weichstoff bei Kollidieren mit einem Hindernis in allen Richtungen nachgibt und ausweicht, so daß es nicht zu einem Anstoßen, Anecken oder gar Hängenbleiben eines kollidierenden Karts kommen kann.

Um auch Verletzungen durch das Spiegelmaterial selbst im Falle eines Kontaktes mit dem Fahrer bei einem Unfall zu vermeiden, weist der erfindungsgemäße Rückspiegel vorzugsweise einen Körper ebenfalls aus Weichstoff auf, der von einer Spiegelfolie überzogen ist. Eine solche Spiegelfolie kann aus einem Kunststoff-Metallfolien-Verbundmaterial bestehen. Statt einer Spiegelfolie kann auch eine spiegelnde Farbe zum Bedecken des Körpers aus Weichstoff eingesetzt sein.

Vorzugsweise bildet der Körper des Rückspiegels ein mit dem Träger einstückiges oder fest verbundenes Teil.

Um dem Fahrer die Orientierung nach hinten auf beiden Seiten des Fahrzeuges zu ermöglichen, hat der Träger bevorzugt zwei seitlich wegstehende Ausbuchtungen, an denen je ein Rückspiegel in der beschriebenen Weise ausgebildet ist.

Zur zusätzlichen Orientierung für den Fahrer kann das Gerät außer dem einen oder mehreren Rückspiegeln Kontrollinstrumente, wie Drehzahlmesser, Anzeigethermometer sowie Sicherungsvorrichtungen, wie Warnlampen oder Schalter umfassen.

Der Träger kann in seinem unteren Bereich trichterartig verengt sein, wobei durch die trichterartige Verengung gebündelte Zuleitungen zu den Kontrollinstrumenten und Sicherungsvorrichtungen durchgeführt sein können.

Der Träger kann einen Schutz für den Körper des Fahrers, insbesondere für dessen Beine und Kniee im Falle einer Kollision bilden. Auch kann der Träger zur Verringerung des Luftwiderstandes des Rennfahrzeuges auf seiner Vorderseite aerodynamisch ausgestaltet sein.

Als Weichstoff kann ein Elastomerkunststoff oder ein Polyurethan(PU)-Kunststoff eingesetzt werden, aus dem der Träger mit bekannten Fertigungsmethoden, wie Spritzen, Pressen, Schäumen oder dergleichen geformt wird. Der Träger und/oder jeder Rückspiegel-Körper kann insbesondere aus Hartgummi geformt sein.

Die Erfindung ist im folgenden anhand schematischer Zeichnungen an Ausführungsbeispielen mit weiteren Einzelheiten näher erläutert.

Es zeigen:
- Fig. 1: eine stark schematisierte Seitenansicht eines Karts mit einem Träger gemäß der Erfindung mit integrierten Rückspiegeln auf jeder Seite;
- Fig. 2: in größerem Maßstab eine Ansicht in Fahrtrichtung auf den vor dem Fahrersitz befindlichen Träger;
- Fig. 3: in gleicher Ansicht wie Fig. 2 einen durch seitliche Kräfte P gestauchten, erfindungsgemäßen Träger;
- Fig. 4 bis 7: in einer Vorderansicht, einer Seitenansicht, einer Draufsicht und einer Ansicht von hinten, d.h. in Fahrtrichtung, einen aus einem Elastomerkunststoff geformten Träger mit integrierten Rückspiegeln.

Ein Kart gemäß der Erfindung hat vier Räder 2, einen starren Rahmen 4, einen im Heck angeordneten Motor 6, einen Fahrersitz 8, ein Lenkrad 10 und davor einen Schutzschild bzw. Träger 12 aus einem Weichstoff, wie einem Elastomerkunststoff oder einem Polyurethan (PU)-Schaumstoff.

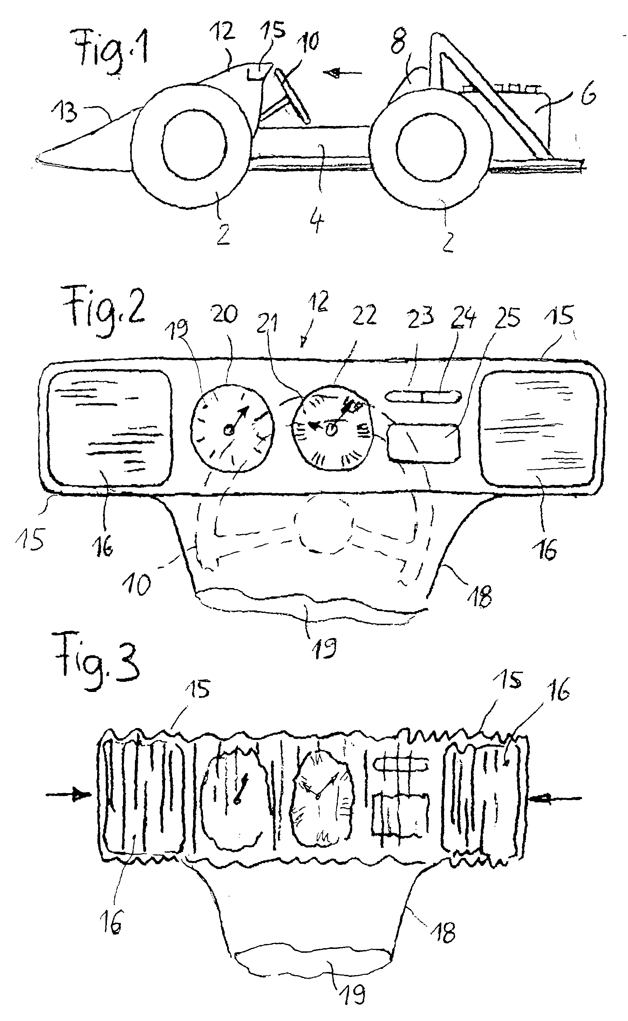

Der Träger ist, wie Fig. 1 erkennen läßt, in seiner vorderen Partie 13 aerodynamisch geformt. In seiner hinteren, dem Fahrer nächstliegenden Partie hat der Träger 12 seitliche Ausbuchtungen 15, welche zur Anbringung von Spiegeln 16 dienen. Zentral hat der Träger 12 eine trichterartige Verengung 18 mit einem sich nach unten verjüngenden Hohlraum 19. Durch diesen Hohlraum 19 ist ein Bündel von Kabeln zu Kontrollinstrumenten 20, wie einem Drehzahlmesser 22, einer Zeituhr und Kontrollampen 23, 24 für Öl- bzw. Wassertemperatur oder dergleichen geführt. Auch können nicht gezeigte Schalter zum Auslösen von Funktionen vorgesehen sein.

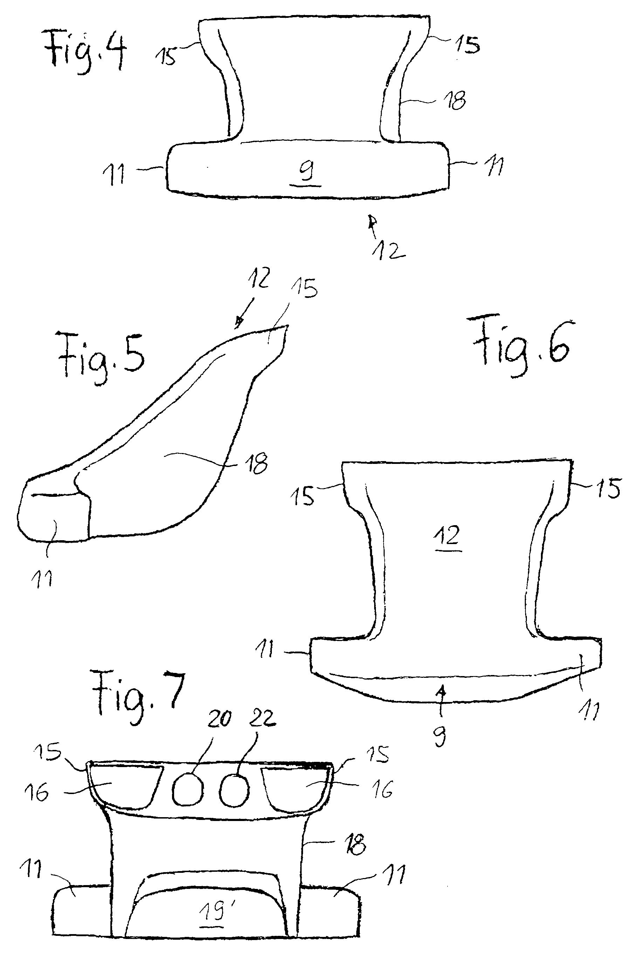

Fig. 3 zeigt in einer vereinfachten Darstellung den horizontal von beiden Seiten gestauchten Träger 12 (Pfeile P). Die Spiegel 16 sowie die Anzeigefelder 19, 21 der Kontrollinstrumente 20, 22 können die Stauchung mitmachen, weil sie nicht aus Glas, sondern vielmehr aus einem Verbundmaterial aus einer Kunststoffolie und einer darüber aufgezogenen, spiegelnden Metallfolie bestehen. Je eine solche Verbundfolienschicht ist im gewünschten, an die Ausbuchtungen angepaßten Format in versenkte Flächen der geformten Ausbuchtungen 15 eingeklebt.

Alternativ können die entsprechenden Flächen der Ausbuchtungen 15 auch mit einer Spiegelfarbe beschichtet sein. Aus Fig. 3 ist ersichtlich, daß die Knautschung im Bereich der Ausbuchtung 15 größer ist als im weiter innen liegenden Bereich mit den Kontrollinstrumenten. Dies ist darauf zurückzurühren, daß hier ein größerer Widerstand gegen ein Stauchen bzw. Knautschen aufgrund der versteifenden Wirkung der zentralen Verengung 18 herrscht. Diese Verengung 18 schützt im Falle einer Kollision sowohl den Becken- und Beinbereich des Fahrers als auch die zu den Kontrollinstrumenten 20 bis 25 führenden Zuleitungen.

Die Ausführung nach den Fig. 4 bis 7 macht deutlich, daß ein Träger 12 als einstückiges Formteil durch herkömmliche Fertigungsverfahren, wie Pressen, Spritzgießen, Aufschäumen oder durch Gieß- bzw. Auftragsformen, gegebenenfalls unter Verstärkung durch eine eingelegte Glasfasermatte, hergestellt sein kann, die allerdings nicht in stauchfähige Gebiete nahe dem Fahrer hineinreichen sollte. Der Einfachheit halber sind gleiche bzw. gleich wirkende Teile mit gleichen Bezugszeichen bezeichnet und hier nicht noch einmal beschrieben. Fig. 4 zeigt eine Abwandlung im unteren Bereich des Trägers 12 in Form eines Rammschutzes 9, der sich zu beiden Seiten hin auch über die Räder 2 hinwegerstreckt.

Auch bei dieser Ausführung bestehen die Spiegel nicht aus Glas sondern aus einem eine Stauchung oder Knautschung des Trägers 12 mitmachenden Material wie oben beschrieben. Somit ist das Verletzungsrisiko für den Fahrer und das Risiko, daß ein kollidierendes Fahrzeug anstößt, aneckt oder hängenbleibt, deutlich gemindert.

## Patentansprüche

1. Anlage mit Gerät zur Fahrerorientierung für ein Kart, mit einem vor dem Fahrersitz (8) angeordneten Träger (12), der aus einem unter Belastung ausweichenden, knautschbaren und zumindest im Bereich vor dem Fahrer unverstärkten Weichstoff besteht, in den das selbst aus Weichstoff bestehende, mindestens einen Rückspiegel (16) umfassende Gerät (16; 20-25) integriert ist.

2. Anlage nach Anspruch 1, **dadurch gekennzeichnet, daß** der Rückspiegel (16) einen Körper (15) aus Weichstoff aufweist, der von einer Spiegelfolie überzogen ist.

3. Anlage nach Anspruch 1, **dadurch gekennzeichnet, daß** der Rückspiegel (16) einen Körper (15) aus Weichstoff aufweist, der von einer spiegelnden Farbe bedeckt ist.

4. Anlage nach Anspruch 2 oder 3, **dadurch gekennzeichnet, daß** der Körper (15) ein mit dem Träger (12) einstückiges Teil (15) bildet.

5. Anlage nach Anspruch 4, **dadurch gekennzeichnet, daß** der Körper von zwei seitlichen Ausbuchtungen (15) des Trägers (12) gebildet ist, an welchen je ein Rückspiegel (16) angebracht ist.

6. Anlage nach einem der Ansprüche 1 bis 5, **dadurch gekennzeichnet, daß** das Gerät zusätzlich zu dem einen oder zwei Rückspiegeln (16) Kontrollinstrumente (20, 22) aufweist, die ebenfalls aus Weichstoff bestehen.

7. Anlage nach einem der Ansprüche 1 bis 6, **dadurch gekennzeichnet, daß** der Träger (12) in seinem unteren Bereich eine trichterartige Verengung (18) hat.

8. Anlage nach Anspruch 7, **dadurch gekennzeichnet, daß** durch die trichterartige Verengung (18) Zuleitungen zu den Kontrollinstrumenten (20 - 25) und Sicherungsvorrichtungen durchgeführt sind.

9. Anlage nach einem der Ansprüche 1 bis 8, **dadurch gekennzeichnet, daß** der Träger aus einem Elastomerkunststoff geformt ist.

10. Anlage nach einem der Ansprüche 1 bis 8, **dadurch gekennzeichnet, daß** der Träger aus einem PU-Kunststoff geformt ist.

11. Anlage nach einem der Ansprüche 1 bis 10, **dadurch gekennzeichnet, daß** der Träger und/oder der oder jeder Körper des Rückspiegels aus Hartgummi geformt ist.

## Claims

1. An installation with apparatus for driver orientation for a go-cart, with a support (12) disposed in front of the driver's seat (8) and consisting of a deformable soft material which yields under load and is unreinforced at least in the zone in front of the driver, in which soft material there is integrated at the apparatus (16; 20-25), which itself consists of soft material and comprises at least one rear view mirror (16).

2. An installation according to claim 1, **characterised in that** the rear view mirror (16) comprises a body (15) of soft material covered by a mirror foil.

3. An installation according to claim 1, **characterised in that** the rear view mirror (16) comprises a body (15) of soft material which is covered by a specular paint.

4. An installation according to claim 2 or 3, **characterised in that** the body (15) forms a part (15) integral with the support (12).

5. An installation according to claim 4, **characterised in that** the body is formed by two lateral bulges (15) of the support (12), on each of which bulges a rear view mirror (16) is disposed.

6. An installation according to any one of claims 1 to 5, **characterised in that** the apparatus has, in addition to the one or two rear view mirrors (16), control instruments (20, 22), which also consist of soft material.

7. An installation according to any one of claims 1 to 6, **characterised in that** the support (12) has a funnel-shaped narrowing (18) in its bottom zone.

8. An installation according to claim 7, **characterised in that** supply lines to the control instruments (20 - 25) and safety devices are passed through the funnel-shaped narrowing (18).

9. An installation according to any one of claims 1 to 8, **characterised in that** the support is formed from an elastomer plastic.

10. An installation according to any one of claims 1 to 8, **characterised in that** the support is formed from a PU plastic.

11. An installation according to any one of claims 1 to 10, **characterised in that** the support and/or the or each body of the rear view mirror is formed from hard rubber.

## Revendications

1. Structure comportant un dispositif pour l'orientation d'un conducteur de kart, comportant un support (12) disposé devant le siège (8) du conducteur, constitué d'un matériau mou pouvant se froisser et se déporter sous l'effet d'une contrainte, et non renforcé au moins dans la zone du conducteur, dans lequel est intégré le dispositif (16 ; 20-25), également constitué de matériau mou et comportant au moins un rétroviseur (16).

2. Structure selon la revendication 1, **caractérisée en ce que** le rétroviseur (16) présente un corps (15) en matériau mou recouvert d'une feuille réfléchissante.

3. Structure selon la revendication 1, **caractérisée en ce que** le rétroviseur (16) présente un corps (15) en matériau mou recouvert d'une couleur réfléchissante.

4. Structure selon la revendication 2 ou 3, **caractérisée en ce que** ledit corps (15) forme une seule pièce (15) avec le support (12).

5. Structure selon la revendication 4, **caractérisée en ce que** ledit corps est formé par deux échancrures latérales (15) du support (12), un rétroviseur (16) étant rapporté sur chacune d'entre elles.

6. Structure selon l'une des revendications 1 à 5, **caractérisée en ce que** le dispositif présente, en plus du ou des deux rétrcviseurs (16), des instruments de contrôle (20, 22), qui sont également constitués de matériau mou.

7. Structure selon l'une des revendications 1 à 6, **caractérisée en ce que** le support (12) présente, à sa partie inférieure, un rétrécissement en forme d'entonnoir (18).

8. Structure selon la revendication 7, **caractérisée en ce que** des conducteurs sont menés aux instruments de contrôle (20-25) et à des appareils de sécurité par l'intermédiaire du rétrécissement en forme d'entonnoir (18).

9. Structure selon l'une des revendications 1 à 8, **caractérisée en ce que** le support est constitué d'une matière artificielle élastomère.

10. Structure selon l'une des revendications 1 à 8, **caractérisée en ce que** le support est constitué d'une matière artificielle de type polyuréthane (PU).

11. Structure selon l'une des revendications 1 à 10, **caractérisée en ce que** le support et/ou le ou chaque corps de rétroviseur est en ébonite.
